# EUROPÄISCHE PATENTANMELDUNG

(11) **EP 1 517 527 A1**
(43) Veröffentlichungstag der Anmeldung: **23.03.2005**
(21) Anmeldenummer: 03405679.6
(22) Anmeldetag: 16.09.2003
(51) Int. Cl.: H04M 3/487, H04M 3/436, H04Q 1/30, H04Q 3/00, H04Q 7/32, H04M 1/725, H04M 1/64, H04M 15/00

(54) **Verfahren, um Audiotöne, die dem Anrufer während einem Verbindungsaufbau wiedergegeben werden, zu ersetzen**

(71) Anmelder: Swisscom Mobile AG, 3050 Bern (CH)
(72) Erfinder: Lauper, Eric, 3014 Bern (CH); Granath, Nils, 3014 Bern (CH)
(74) Vertreter: P&TS Patents & Technology Surveys SA

(57) **Zusammenfassung**

Verfahren, um einen Audioton, zum Beispiel ein Rufton, Besetztton und/oder Weiterleitungston, der einem Anrufer (1) während einem Verbindungsaufbau wiedergegeben wird, durch ein anderes Signal zu ersetzen beziehungsweise zu ergänzen,
dadurch gekennzeichnet, dass das benannte Signal von der Zeit, vom Standort des Anrufers (1), vom Standort des gewünschten Teilnehmers (3), und/oder vom verfügbaren Geldbetrag auf einem Konto (24) des Anrufers abhängig ist.

## Beschreibung

Die vorliegende Erfindung betrifft Telekommunikationsdienste, insbesondere Dienste, um Audiotöne, insbesondere Ruftöne, Besetzttöne, und/oder Weiterleitungstöne, zu ersetzen.

Es sind bereits Verfahren und Systeme bekannt, um die langweiligen Ruftöne oder Besetzttöne, die dem Anrufer während dem Verbindungsaufbau wiedergegeben werden, durch Werbungen oder andere Audiosignale zu ersetzen. Ein solches Verfahren wurde unter anderem in WO-A1-0062524 beschrieben. Es ist auch bereits bekannt, dass ein Teil der Verbindungskosten durch solche Werbung während dem Verbindungsaufbau bezahlt werden.

Für Werbe-Betreibende haben solche Systeme jedoch den Nachteil, dass sie kaum gezielte Werbung ermöglichen. Alle Anrufer, die das System gewählt haben und an die gleiche Vermittlungsstelle angeschlossen sind, hören die gleiche Werbung. Nur Werbe-Betreibende, die nationale Werbekampagnen planen, sind an einer solchen Werbung interessiert; für lokale KMU's ist eine solche ungezielte Werbung jedoch kaum rentabel.

Es ist daher ein Ziel der vorliegenden Erfindung, ein Verfahren und ein System anzubieten, mit welchen solche Nachteile vermieden werden. Es ist insbesondere ein Ziel der vorliegenden Erfindung, ein System und ein Verfahren zum Ersetzen oder Ergänzen von Audiotönen vorzuschlagen, mit welchen gezielte Werbung ermöglicht wird.

Ein anderes Ziel der Erfindung ist es, ein Verfahren und ein System anzubieten, in welchen dem Anrufer während dem Verbindungsaufbau nützliche Informationen wiedergegeben werden.

Ein anderes Ziel der Erfindung ist es, ein Verfahren und ein System anzubieten, in welchen das Signal, das dem Anrufer während dem Verbindungsaufbau wiedergegeben wird, auf intelligente Weise gewählt wird.

Diese Ziele werden anhand eines Verfahrens mit den Merkmalen des unabhängigen Verfahrensanspruchs erreicht; bevorzugte Ausführungsformen werden ausserdem in den Nebenansprüchen angegeben.

Diese Ziele werden insbesondere durch ein Verfahren, um einen Audioton, zum Beispiel ein Rufton, Besetztton und/oder Weiterleitungston, der einem Anrufer während einem Verbindungsaufbau wiedergegeben wird, durch ein anderes Signal zu ersetzen beziehungsweise zu ergänzen, in welchem das Signal statt nur den angerufenen, besetzten und/oder weitergeleiteten Zustand anzugeben von mindestens einem anderen Parameter des Anrufers, des gewünschten Teilnehmers und/oder des Kommunikationsnetzwerks abhängig ist, wobei der andere Parameter automatisch ermittelt wird.

Diese Ziele werden auch durch ein Verfahren, durch ein System und durch einen Computerdatenträger erreicht, um einen Audioton (zum Beispiel ein Rufton, Besetztton und/oder Weiterleitungston) der einem Anrufer während einem Verbindungsaufbau wiedergegeben wird, durch ein anderes Signal zu ersetzen beziehungsweise zu ergänzen,
in welchen dieses Signal von der Zeit, vom Standort des Anrufers, vom Standort des gewünschten Teilnehmers, und/oder vom verfügbaren Geldbetrag auf dem Konto des Anrufers abhängig ist.

Da das wiedergegebene Signal in Abhängigkeit von vorbestimmten Parametern und nicht zufällig bestimmt wird, können gezielte Werbekampagnen organisiert werden. Ein Werbe-Betreibender könnte beispielsweise eine Audiowerbung an alle Anrufer, die aus einem bestimmten geographischen Gebiet während einer bestimmten Zeit anrufen, aussenden. Ein Netzbetreiber kann mit diesem Verfahren seine Teilnehmer informieren, wenn der verfügbare Geldbetrag auf ihren Geldkonto unter eine bestimmte Schwelle gefallen ist.

Die vorliegende Erfindung wird mit Hilfe der Beschreibung besser verständlich, welche als Beispiel angeführt ist und durch die Figur dargestellt wird, wobei:

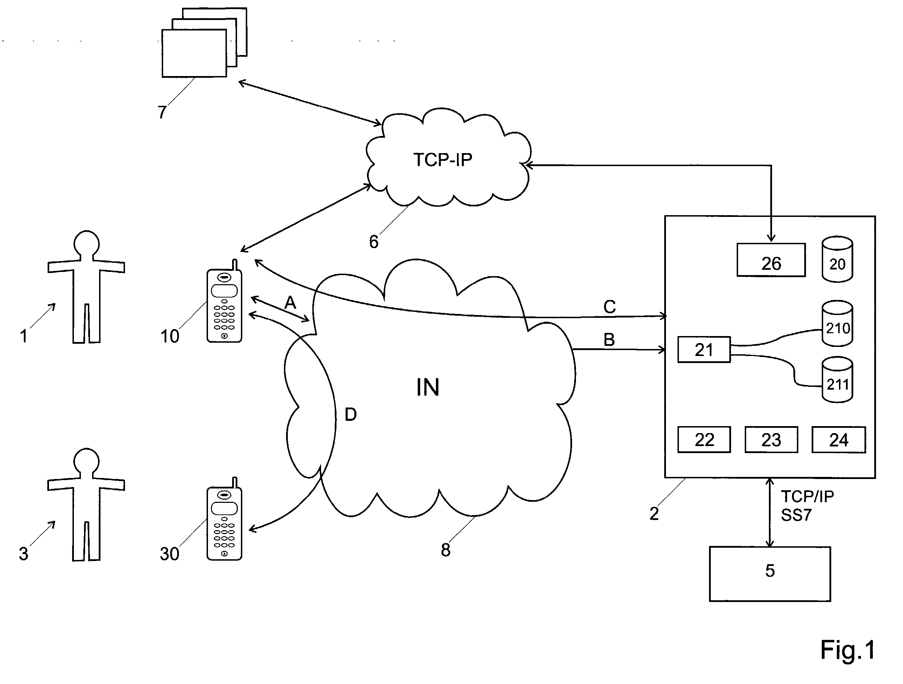

Die Figur 1 ein Blockschema eines Netzwerksystems zeigt, mit einem intelligenten Netzwerk und einem Server, der bestimmt, welche Anrufer welche Audiotöne zu hören bekommen.

Die Figur 1 zeigt einen Anrufer 1 mit einem Telefon-Endgerät 10, zum Beispiel ein Fixnetzgerät, ein Mobilgerät, ein VolP-fähiges Gerät, usw. Das Endgerät verfügt über Wiedergabemittel, zum Beispiel einen Lautsprecher und eine Anzeige, um Signalmeldungen in analoger Form wiederzugeben.

Der Anrufer will eine telefonische Verbindung mit dem gewünschten Teilnehmer 3 aufbauen lassen, der über ein Endgerät 30 verfügt. Die Verbindung muss über das Telefon-Netz 8 erfolgen. Das Telefon-Netz 8 kann beispielsweise ein intelligentes Fixnetz oder ein Mobilfunknetz sein (beispielsweise ein ISDN-Netz, ein GSM-Netz, ein UMTS-Netz, usw.), das Internet im Fall einer Voice over IP Verbindung, oder eine Kombination davon

Ein Serversystem 2 ist in der Infrastruktur des Netzes 8 vorhanden oder mit diesem Netz verbunden. Das Serversystem führt eine speziell für das Verfahren entwickelte Softwareanwendung aus, die auf einem Datenträger (zum Beispiel eine Festplatte oder ein optischer oder magnetischer Datenträger) gespeichert ist.

Das Serversystem wird beispielsweise vom Betreiber des Telefon-Netzes 8 betrieben, oder von einem Dienstanbieter, der persönliche Audiotöne an eine Vielzahl von unabhängigen, nur über das Netz 8 miteinander verbundene Teilnehmer 1, 3 anbietet.

Das Serversystem 2 bestimmt, ob dem Anrufer 1 beim Verbindungsaufbau spezielle Audiotöne wiedergegeben werden müssen. Im dargestellten bevorzugten Beispiel umfasst der Server 1 eine Signaldatenbank 20, in welcher eine Vielzahl von unterschiedlichen Audiotönen oder multimedialen Tönen abgelegt ist. Ein Signalbestimmungsmodul 21 (zum Beispiel ein Softwaremodul, das von einem Prozessor-System im Server 2 ausgeführt wird) bestimmt das Signal aus der Datenbank 20, das für jeden Anruf verwendet wird. Dabei werden Sendepläne, die von werbebetreibenden Drittanbietern 7 oder anderen Parteien in einem Sendeplaner 210 abgelegt werden, berücksichtigt. Anrufer können auch persönliche Profile in einer Teilnehmerdatenbank 211 ablegen, um das Verhalten des Signalbestimmungsmoduls 21 bei einkommenden oder ausgehenden Anrufen zu beeinflussen.

Der Server 2 beinhaltet ausserdem ein Standortbestimmungsmodul 22, oder ist mit einem solchen System über eine Datenverbindung verbunden. Das Standortbestimmungsmodul kann den Standort des Anrufers 1 und/oder des gewünschten Teilnehmers 3 bestimmen. In einer einfachen Variante wird der Standort einfach anhand der Vorwahl der Teilnehmer 1, 3 bestimmt. In einem Mobilfunknetz kann beispielsweise die Identifikation der Mobilfunkzelle, in welcher sich der Mobilteilnehmer gerade befindet, verwendet werden. Genauere Standortbestimmungsverfahren, beispielsweise anhand von GPS-Empfängern bei den Teilnehmern 1, 3 oder mit Triangulationsverfahren in der Infrastruktur eines Mobilfunknetzes, können im Rahmen der Erfindung auch verwendet werden.

Das Serversystem 2 umfasst ausserdem ein Zeitbestimmungsmodul 23 (zum Beispiel eine Quarzuhr) oder ist mit einem solchen Modul verbunden. Das Zeitbestimmungsmodul kann die lokale Zeit, und/oder die Zeit im Gebiet wo der Anrufer 1 sich befindet, bestimmen.

Das Serversystem 2 umfasst ausserdem einen oder mehrere elektronische Geldkonten 24, oder kann auf solche Geldkonten zugreifen, um insbesondere den Saldo des Anrufers 1 auf diesem Geldkonto zu bestimmen. Mindestens ein Geldkonto 24 ist vorzugsweise ein Prepaid-Konto für die Benutzung des Telefon-Netzes 8.

Ein Billingszentrum 5 ist im Serversystem vorgesehen oder mit diesem Serversystem über ein TCP/IP oder SSZ Link verbunden, um die vom Serversystem 2 angebotenen Dienste entweder dem Anrufer 1, dem gewünschten Teilnehmer 3 und/ oder Drittparteien 7 zu verrechnen. Die Rechnung kann beispielsweise durch Belastung eines der Geldkonten 24 oder einer Kreditkarte, mit der periodischen Rechnung des Netzbetreibers für die Benutzung des Netzes 8, usw. erfolgen.

Signale in der Datenbank 20, Benutzerprofile in der Teilnehmerdatenbank 211, oder Sendepläne in der Datenbank 210 können vorzugsweise von den Anrufern 1, von den gewünschten Teilnehmern 3, vom Betreiber des Netzes 8 oder des Servers 2, und/oder von Drittparteien 7, zum Beispiel Werbe-Betreibenden, über ein Netz 6, beispielsweise ein TCP-IP Netz, geändert werden. Spezifischer können Werbe-Betreibende 7 einen Sendeplan für die Verteilung ihrer Werbung im Speicherbereich 210 ablegen. Signale, die in der Datenbank 20 gespeichert werden, können von den Anrufer 1, von den gewünschten Teilnehmern 2 zuhanden ihrer Anrufer, vom Netzbetreiber oder von Drittparteien 7 gespeichert werden. Teilnehmer können in der Teilnehmerdatenbank 211 Profile ablegen, die das Verhalten des Systems 2 bei ankommenden und bei abgehenden Verbindungen festlegen. Diese Daten werden vorzugsweise über ein gesichertes Portal 26, zum Beispiel ein WEB-Portal, ein WAP-Portal, ein SMS-Portal, ein USSD-Händler, oder ein Sprachportal mit einem interaktiven Spracherkennungssystem (IVR, Interactive Voice Response System), den Bedürfnissen angepasst. Nur abonnierte oder zumindest registrierte Teilnehmer oder Drittparteien können über das Portal 26 auf diese Daten zugreifen.

Wenn der Anrufer 1 mit seinem Endgerät 10 den gewünschten Teilnehmer 3 anruft, wird der Anrufaufbau von einer nicht dargestellten Vermittlungsstelle oder von einem Router im Netzwerk 8 behandelt (Pfeil A). Die Vermittlungsstelle kann beispielsweise ein SSP in einem intelligenten Netzwerk sein, das sich an einem Dienststeuerungspunkt (SCP) orientiert, um die Verbindung aufzubauen (Pfeil B).

Die SSP oder SCP senden dann eine Anfrage an das Serversystem 2, um zu prüfen, ob für diesen Anruf der gewöhnliche Rufton oder Besetztton durch ein anderes Signal ersetzt werden muss.

Die Anfrage umfasst vorzugsweise im Netzwerk 8 bestimmte Parameter, beispielsweise die Nummer oder Identität des Anrufers 1, des gewünschten Teilnehmers 3, den Standort dieser Teilnehmer 1, 3, die Zeit, den verfügbaren Betrag auf einem Prepaid-Geldkonto des Anrufers 1, usw. Manche von diesen Parametern können in einer Variante auch im Serversystem 2 bestimmt werden.

Wenn das Serversystem 2 anhand der Teilnehmerprofile 211, der abgelegten Sendepläne 210 und der allgemeinen Politik des Serverbetreibers bestimmt, dass der gewöhnliche Ton durch ein anderes Signal ersetzt werden muss, wird dieses Signal dem Anrufer 1 über das Netzwerk 8 wiedergegeben (Pfeil C), bis zum Aufbau oder Weiterleitung der Verbindung oder bis zum Abbruch des Verbindungsversuchs.

Eine Vielzahl von individuellen Signalen, zum Beispiel Audiotöne und andere Objekte, werden in einer Datenbank 20 im Serversystem 2 abgelegt. Es können in der Datenbank 20 nicht nur Audiotöne, sondern auch multimediale Signale, einschliesslich Textmeldungen, feste und animierte Bilder (zum Beispiel gif, jpeg or mpeg Dateien), HTML-, WLM- und Voice-XML-Seiten, Sprachmenus, Programme, Applets, usw. in digitaler Form gespeichert werden, die den Anrufern 1 wiedergegeben werden. Es können in der Datenbank 20 entweder die Objekte selbst, oder ein Verweis zu diesen Objekten (beispielsweise deren Adresse im Betriebssystem des Servers 2 oder ein URL-Link zu einem Objekt im Internet 6) abgelegt werden. Es können auch Signale verwendet werden, die in Echtzeit und ohne Zwischenablage in der Datenbank 20 empfangen werden, beispielsweise das Funksignal von einem Rundfunksender.

Das als Rufton und/oder Besetztton verwendete Signal kann beispielsweise Nachrichten, Verkehrsinfos, Wettervorhersagen, Zeituhren, oder ein Radioprogramm umfassen, wobei diese Angaben zeit- und/oder standortabhängig sein können. Es können auch personalisierte Empfehlungen des Netzwerkbetreibers für den Anrufer verwendet werden, zum Beispiel Empfehlungen über die Qualität der Übertragung, wie etwa *"Die Übertragungsqualität wird voraussichtlich schlecht sein, bitte gehen Sie mit Ihrem Mobilgerät in eine besser abgedeckte Zone* ". Es können auch personalisierte Angebote des Netzbetreibers oder des Verwalters des Servers 2 wiedergegeben werden, zum Beispiel "*Sie haben im letzten Monat mehr als 100 Minuten telefoniert. Für Sie wäre unsere andere Abo-Formel günstiger. Bitte wählen Sie die Taste 1, wenn Sie nach Ihrem Anruf von einem unserer Mitarbeiter über die Vorteile dieses Abos kontaktiert werden wollen*" oder "*Ihr Endgerät ist ein nicht mehr ganz aktuelles XXX der Marke YYY. Wir haben im Moment ein Angebot für ein moderneres ZZZ. Mehr darüber auf www.ZZZ.com*/*Angebot*", oder noch "*Ihre Prepaid Karte enthält CHF10.50, der gewünschte Anruf wird nach 12 Minuten unterbrochen. Um Ihre Karte vor dem Anruf nachzuladen, wählen Sie die Taste 1*". Möglich sind auch Angaben über den Verbindungspreis und Bedingungen, zum Beispiel "*Sie machen ein Fernanruf während den Geschäftszeiten; die Verbindung kostet CHF0.90 pro Minute*".

Es können auch Angaben über den Inhalt der Sprachbox, Mailbox oder netzbasierte Agenden des Anrufers während dem Verbindungsaufbau gesprochen werden, zum Beispiel "*Ihre Sprachbox enthält eine Sprachmeldung, möchten Sie sie nach Ihrem Anruf hören?*"

Das wiedergegebene Signal kann eine synthetisch erzeugte Sprachmeldung umfassen, wobei die für die Sprachmeldung verwendete Stimme vom Anrufer, vom gewünschten Teilnehmer oder vom Objekt-Inhaber bestimmt werden kann. Möglich ist, dass automatisch die Stimme des gewünschten Teilnehmers verwendet wird, wenn diese Stimme dem Serversystem bekannt ist.

Der Server 2 kann über nicht dargestellten Wiedergabemittel verfügen, um einem Anrufer 1 abgelegte oder synthetisch erzeugte Signale in analoger Form, zum Beispiel als analoges Tonsignal, wiederzugeben.

Die Sprache des Signals wird vorzugsweise automatisch an den Anrufer angepasst; ein Anrufer aus einem deutschen Gebiet wird somit immer deutschsprachige Werbung und Meldungen empfangen.

Das als Rufton, Besetztton oder Weiterleitungston verwendete Signal kann während dem Verbindungsaufbau über den Nutzkanal, an den Anrufer 1 übertragen werden (Pfeil C) und/oder über einen zusätzlichen Dienst- oder Datenkanal. In einer Variante wird gleichzeitig eine Audiomeldung über den Sprachkanal gesprochen und eine zusätzliche Text- oder Bildmeldung über einen Dienst- oder Datenkanal (beispielsweise als USSD, MMS oder TCP-IP Paket) gesendet werden, wobei synchrone oder quasisynchrone Übertragungsprotokolle bevorzugt werden.

Auf diese Weise kann beispielsweise während dem Verbindungsaufbau ein Logo der angerufenen Firma, die Werbung einer Drittfirma oder eine persönliche Text- oder grafische Meldung des gewünschten Teilnehmers auf der Anzeige des anrufenden Telefongeräts angezeigt werden. Ein persönliches Sprachportal mit einem Sprachmenu, in welchem der Anrufer zwischen verschiedenen Optionen wählen kann, kann während dieser Phase dem Anrufer auch als Sprachmeldung zugeschickt werden.

In einer nicht dargestellten Variante wird das dem Anrufer wiedergegebene Signal im Endgerät 10 des Anrufers 1 abgelegt und gespeichert, statt im Server 2. In noch einer anderen Variante wird dieses Signal im Endgerät 30 des gewünschten Teilnehmers 3 abgelegt.

In einer bevorzugten Variante kann jeder Teilnehmer 1 bestimmen, welche Ruftöne, Besetzttöne oder Weiterleitungstöne er als Anrufer hören und/oder sehen will. In einer anderen Variante kann jeder Teilnehmer auch die Signale bestimmen, die ihm von anrufenden Benutzern wiedergegeben werden. In noch einer anderen Variante werden mindestens gewisse Signale von Dritten (zum Beispiel Werbe-Firmen 7 oder Betreiber des Netzwerks 8 oder des Servers 2) bestimmt.

Signale werden vorzugsweise über das WEB-Portal 26 und das Internet 6 von Teilnehmern 1, 3 oder Dritten 7 ferngeladen; wie erwähnt können sie auch über SMS, USSD, oder einen WAP- oder Sprach-Portal angepasst werden.

Die Signale, die dem Anrufer wiedergegeben werden, werden in der dargestellten Variante vom Modul 21 im Serversystem 2 bestimmt. Das Modul 2 bestimmt die auszusendenden Signale in Abhängigkeit von der Identität des Anrufers und/oder des gewünschten Teilnehmers, des Standorts des Anrufers und des gewünschten Teilnehmers, der Zeit, des verfügbaren Saldos auf einem Geldkonto 24 des Anrufers, usw. Möglich ist auch, dass diese Entscheidung im Netzwerk 8, oder in einem der Endgeräte 10, 30 getroffen wird. Diese Entscheidung muss nicht zwangsläufig im Gerät oder System getroffen werden, wo auch das wiedergegebene Signal abgelegt ist.

Das Serversystem 2 umfasst ausserdem einen Sendeplaner 210 (Scheduler), mit welchem ein Sendeplan für die Aussendung mindestens eines Teils der in der Datenbank 20 abgelegten multimedia-Signale bestimmt wird. Der beispielsweise von Drittanbietern 7 reservierte Sendeplan kann für jedes Signal in der Datenbank ein oder mehrere Sendekriterien enthalten. Die Sendekriterien machen die Aussendung jedes Signals von verschiedenen Ereignissen abhängig (beispielsweise von der Identität des Anrufers oder gewünschten Teilnehmers, von der Zeit, vom Wochentag, vom Datum, vom Standort des Anrufers und/oder des gewünschten Teilnehmers, von früheren ausgesendeten Signalen (damit nicht zweimal die gleiche Werbung gehört wird), oder von expliziten Befehlen des Signals-Inhabers. Signale, die mit einem Sendekriterium verknüpft sind, werden als Rufton oder Besetztton ausgesendet, wenn das Kriterium erfüllt ist. Diese Aussendung kann dem Signal-Inhaber vom Betreiber des Serversystems 2 verrechnet werden.

Teilnehmer als Anrufer oder als gewünschte Teilnehmer können vorzugsweise auch zeitabhängige und/oder standortabhängige Kriterien für Signale verwenden. Ein Teilnehmer könnte beispielsweise entscheiden, dass alle ankommenden Anrufe während dem Wochenende oder wenn er sich im Ausland befindet schon während dem Verbindungsaufbau automatisch mit einem Warnsignal begrüsst werden, wie etwa *"Es ist heute Sonntag und obwohl ich erreichbar bin, nehme ich nur private Anrufe gerne entgegen. Sie können aber* gerne *meine Geschäftsnummer anrufen und eine Meldung hinterlassen"*. Andere Signale können für unterschiedliche Anrufer bestimmt werden; beispielsweise ein Hip-Hop Stück für Freunde und klassische Musik für die Eltern.

Dürfen mehrere Parteien Rufsignale in der Datenbank 20 und/oder Sendepläne in der Datenbank 210 ablegen, müssen im Modul 21 Prioritäten definiert werden, um zu entscheiden, welches Signal in welchem Fall verwendet werden soll. Diese Prioritäten können im Voraus vom Server 2 bestimmt werden, werden jedoch in einer bevorzugten Variante vom Anrufer ein für allemal oder vor jedem Anruf festgelegt. Möglich ist beispielsweise, dass Anrufe, bei welchen Werbung während dem Verbindungsaufbau wiedergegeben wird, dem Anrufer billiger verrechnet werden als werbelose Anrufe oder gar als Anrufe mit informativem Inhalt. Vorzugsweise kann somit jeder Anrufer bestimmen, wie und wann er welche Signale hören will, wobei diese Entscheidung als semipermanente Option in der Teilnehmerdatenbank 211 oder mit einer Tastenauswahl vor jedem Anruf getroffen wird. Möglich ist auch, dass das Signal während dem Verbindungsaufbau geändert wird; in diesem Fall hat der Anrufer die Möglichkeit, etwa eine Werbung zu unterbrechen und durch ein anderes Signal (beispielsweise durch die kostenpflichtige Wettervorhersage) zu ersetzen.

Das vom Signalbestimmungsmodul 21 bestimmte Signal wird dann dem Anrufer 1 wiedergegeben (Pfeil C) über das Netzwerk 8, bis zum Aufbau oder Weiterleitung der Verbindung oder bis zum Abbruch des Verbindungsversuchs. Eine erfolgreich aufgebaute Verbindung zwischen dem Anrufer 1 und dem gewünschten Teilnehmer 3 wird mit dem Pfeil D auf der Figur 1 dargestellt. Die Verbindung wird gewöhnlich erst nach dem Aufbau verrechnet, obwohl der personalisierte Ruftondienst der Erfindung als solche auch kostenpflichtig sein kann.

Das ausgesendete Signal kann dem Anrufer verrechnet werden, wenn dieses Signal einen informativen Mehrwert hat. Die Rechnung erfolgt beispielsweise durch Belastung eines der Wertkonten 24, oder mit der periodischen Rechnung des Teilnehmers für die Beanspruchung des Netzes 8 und/ oder des Dienstes 2. Wenn im Gegenteil das Signal eine Werbung von Dritten 7 ist, wird ein Bonus auf einem Geldkonto des Inhabers gutgeschrieben, oder die gerade aufgebaute Verbindung wird billiger verrechnet. Die Werbung wird dem Dritten 7 verrechnet (beispielsweise mit einem periodischen Abo, oder vorzugsweise in Abhängigkeit der Anzahl von wiedergegebenen Signalen) wobei gezielte Werbung teurer verrechnet werden kann.

Wenn das ausgesendete Signal vom gewünschten angerufenen Teilnehmer 3 bestimmt wird, oder von einem anderen Dritten, kann dessen Verbreitung diesem gewünschten Teilnehmer oder dem anderen Dritten verrechnet werden. Möglich ist auch, dass ein Teilnehmer 3 vom Betreiber des Netzes 8 oder des Serversystems 2 bezahlt wird, damit seine Anrufer während dem Verbindungsaufbau eine Werbung erhalten.

Der verrechnete beziehungsweise vergütete Betrag ist vorzugsweise vom Inhalt des Signals abhängig; Wettervorhersagen können beispielsweise teurer verrechnet werden als persönliche Mitteilungen.

Audiosignale während dem Verbindungsaufbau können das gewöhnliche "TUT-TUT-TUT" völlig ersetzen oder nur ergänzen, beispielsweise mit einem Werbetext zwischen den gewöhnlichen Tönen.

## Patentansprüche

1. Ein Verfahren, um einen Audioton, zum Beispiel ein Rufton, Besetztton und/oder Weiterleitungston, der einem Anrufer (1) während einem Verbindungsaufbau wiedergegeben wird, durch ein anderes Signal zu ersetzen beziehungsweise zu ergänzen,
**dadurch gekennzeichnet, dass** das benannte Signal statt nur den angerufenen, besetzten und/oder weitergeleiteten Zustand anzugeben von mindestens einem anderen Parameter des Anrufers (1), des gewünschten Teilnehmers (3) und/oder des Kommunikationsnetzwerks (8) abhängig ist,
und dass der benannte andere Parameter automatisch ermittelt wird.

2. Das Verfahren des Anspruchs 1, in welchem der benannte mindestens ein anderer Parameter mindestens einen Parameter aus der folgenden Liste umfasst:
Zeit, und/oder
Standort des Anrufers (1), und/oder
Standort des gewünschten Teilnehmers (3), und/oder
Verfügbarer Geldbetrag auf einem Konto (24) des Anrufers, und/oder
Qualität der Kommunikation, und/oder
Tarif für die Kommunikation.

3. Das Verfahren eines der Ansprüche 1 bis 2, in welchem das benannte Signal ein Audiosignal ist.

4. Das Verfahren eines der Ansprüche 1 bis 2, in welchem das benannte Signal ein multimediales Signal ist.

5. Das Verfahren des Anspruchs 4, in welchem das benannte Signal ein festes beziehungsweise animiertes Bild enthält, das auf einer Anzeige des Endgeräts des Anrufers dargestellt wird.

6. Das Verfahren eines der Ansprüche 1 bis 5, in welchem das benannte Signal im Endgerät (10) des Anrufers (1) bestimmt wird.

7. Das Verfahren eines der Ansprüche 1 bis 6, in welchem das benannte Signal im Endgerät (30) des gewünschten Teilnehmers (3) bestimmt wird.

8. Das Verfahren eines der Ansprüche 1 bis 6, in welchem das benannte Signal im Telekommunikationsnetzwerk (8) bestimmt wird.

9. Das Verfahren eines der Ansprüche 1 bis 8, in welchem das benannte Signal im Endgerät (10) des Anrufers (1) abgelegt wird.

10. Das Verfahren eines der Ansprüche 1 bis 8, in welchem das benannte Signal im Endgerät (30) des gewünschten Teilnehmers (3) abgelegt wird.

11. Das Verfahren eines der Ansprüche 1 bis 8, in welchem das benannte Signal im Telekommunikationsnetzwerk (8) abgelegt wird.

12. Das Verfahren eines der Ansprüche 1 bis 8, in welchem das benannte Signal im Internet (6) abgelegt wird.

13. Das Verfahren eines der Ansprüche 1 bis 12, in welchem das benannte Signal im voraus vom Anrufer (1) bestimmt wird.

14. Das Verfahren eines der Ansprüche 1 bis 12, in welchem das benannte Signal während dem Verbindungsaufbau vom Anrufer (1) bestimmt wird.

15. Das Verfahren eines der Ansprüche 1 bis 14, in welchem das benannte Signal vom gewünschten Teilnehmer (3) bestimmt wird.

16. Das Verfahren eines der Ansprüche 1 bis 15, in welchem das benannte Signal vom Betreiber des Telekommunikationsnetzwerks (8) bestimmt wird.

17. Das Verfahren eines der Ansprüche 1 bis 16, in welchem das benannte Signal von Drittanbietern (7) bestimmt wird.

18. Das Verfahren des Anspruchs 17, in welchem eine Vielzahl von Drittanbietern (7) Sendeprogramme (210) reservieren, um Werbe-Signale in Abhängigkeit von der Zeit, dem Standort des Anrufers (1) und/oder Standort des gewünschten Teilnehmers (3) als Rufton oder Besetztton zu senden.

19. Das Verfahren des Anspruchs 18, in welchem das benannte Signal von einem Rundfunksender zur Verfügung gestellt wird.

20. Das Verfahren eines der Ansprüche 1 bis 19, in welchem der Anrufer (1) selbst bestimmt, ob er zum Beispiel sein eigenes Signal oder das Signal eines Dritten hören will.

21. Das Verfahren eines der Ansprüche 1 bis 20, in welchem das benannte Signal dem Anrufer (1) verrechnet beziehungsweise vergütet wird.

22. Das Verfahren eines der Ansprüche 1 bis 21, in welchem das benannte Signal dem gewünschten Teilnehmer (3) verrechnet beziehungsweise vergütet wird.

23. Das Verfahren eines der Ansprüche 19 bis 22, in welchem der verrechnete beziehungsweise vergütete Betrag vom Inhalt des Signals abhängig ist.

24. Das Verfahren eines der Ansprüche 1 bis 23, in welchem das benannte Signal von der Identität des Anrufers (1) abhängt.

25. Das Verfahren eines der Ansprüche 1 bis 24, in welchem das benannte Signal Nachrichten, Verkehrsinfos, Wettervorhersagen, eine Zeituhr, oder ein Radioprogramm enthält.

26. Das Verfahren eines der Ansprüche 1 bis 25, in welchem das benannte Signal ein Sprachmenu enthält.

27. Das Verfahren eines der Ansprüche 1 bis 26, in welchem das benannte Signal personalisierte Empfehlungen des Betreibers des Netwerks (6) für den Anrufer (1) enthalten.

28. Das Verfahren eines der Ansprüche 1 bis 27, in welchem das benannte Signal eine synthetisch erzeugte Sprachmeldung umfasst, wobei die für die Sprachmeldung verwendete Stimme vom Anrufer (1) bestimmt wird.

29. Das Verfahren eines der Ansprüche 1 bis 28, in welchem das benannte Signal eine synthetisch erzeugte Sprachmeldung umfasst, wobei die für die Sprachmeldung verwendete Stimme vom gewünschten Teilnehmer bestimmt wird.

30. Das Verfahren eines der Ansprüche 1 bis 29, in welchem die Sprache des benannten Signals automatisch an den Anrufer (1) angepasst wird.

31. Das Verfahren eines der Ansprüche 1 bis 30, in welchem der benannte Standort des Anrufers (8) im telefonischen Netzwerk (8) bestimmt wird.

32. Das Verfahren eines der Ansprüche 1 bis 31, in welchem der benannte Standort des Anrufers (8) im telefonischen Netzwerk anhand der Vorwahl der Nummer des Anrufers bestimmt wird.

33. Das Verfahren eines der Ansprüche 1 bis 32, mit folgenden Schritten:
mindestens ein Parameter aus der folgenden Liste zu bestimmen: Zeit, Standort des Anrufers, Standort des gewünschten Teilnehmers, verfügbarer Geldbetrag auf dem Konto des Anrufers:
ein Signal in Abhängigkeit des benannten Parameters automatisch aus mehreren vordefinierten Signalen zu bestimmen,
das benannte Signal dem Anrufer (1) wiederzugeben.

34. Ein System (2; 8), um ein Signal, zum Beispiel einen Rufton, Besetztton und/oder Weiterleitungston, einem Anrufer (1) während einem Verbindungsaufbau zu bestimmen,
**dadurch gekennzeichnet, dass** es über ein Signalbestimmungsmodul (21) verfügt, um das benannte Signal in Abhängigkeit von mindestens einem anderen Parameter des Anrufers (1), des gewünschten Teilnehmers (3) und/oder des Kommunikationsnetzwerks als einen angerufenen, besetzten und/oder weitergeleiteten Zustand (8) zu bestimmen,
wobei der benannte andere Parameter automatisch ermittelt wi rd.

35. Das System (2; 8) des Anspruchs 34, das mit Teilnehmer-Standortbestimmungsmitteln (22), Zeitbestimmungsmitteln (23), und/oder einem Billing-System (5) verbunden ist,
und wobei das benannte Signalbestimmungsmodul (21) das benannte Signal in Abhängigkeit der Zeit, des Standorts des Anrufers (1), des Standorts des gewünschten Teilnehmers (3) und/oder des verfügbaren Geldbetrags auf einem Konto (24) des Anrufers (1) bestimmt.

36. Das System eines der Ansprüche 34 bis 35, das mit einem intelligenten Netzwerk (8) verbunden ist.

37. Das System eines der Ansprüche 34 bis 36, mit einem Speicherbereich (20) in welchem eine Vielzahl von benannten Signalen abgelegt ist.

38. Das System des Anspruchs 37, mit Wiedergabemitteln um einem Anrufer (1) die benannten abgelegten Signale in analoger Form wiederzugeben.

39. Das System eines der Ansprüche 34 bis 38, in welchem eine Vielzahl von Benutzerprofilen (211) abgelegt ist, in welchen Anruferpräferenzen gespeichert sind.

40. Das System eines der Ansprüche 34 bis 39, mit einem Portal (26), das mit einem Daten-Telekommunikationsnetzwerk verbunden ist, um Benutzerpräferenzen und/oder Signale zu ändern.

41. Das System des Anspruchs 40, in welchem das benannte Portal (26) ein Portal aus der folgenden Liste ist: web-Portal, wap-Portal, SMS-Portal, USSD-Händler, Sprachportal.

42. Das System eines der Ansprüche 34 bis 41, mit einem Verrechnungszentrum (5), um die Benutzung des benannten Systems zu verrechnen.

43. Das System eines der Ansprüche 34 bis 42, mit einem Sprachgenerator, um Texte in den benannten Audiosignalen umzusetzen.

44. Datenträger in welchem ein Programm gespeichert ist, das das Verfahren eines der Ansprüche 1 bis 33 ausführt, wenn es von einem Server durchgeführt wird.
